# EUROPEAN PATENT SPECIFICATION

(11) **EP 3 283 596 B1**
(45) Date of publication and mention of the grant of the patent: **12.02.2020**
(21) Application number: 16717796.3
(22) Date of filing: 12.04.2016
(51) Int. Cl.: C09K 8/32

(54) **ADDITIVE COMPOSITIONS FOR DRILLING FLUIDS AND METHODS FOR THEIR USE**
ADDITIVZUSAMMENSETZUNGEN FÜR BOHRFLÜSSIGKEITEN UND VERFAHREN ZU DEREN VERWENDUNG
COMPOSITIONS D'ADDITIF POUR FLUIDES DE FORAGE ET PROCÉDÉS POUR LEUR UTILISATION

(30) Priority: 16.04.2015 US 201562148234 P
(43) Date of publication of application: 21.02.2018
(73) Proprietor: The Lubrizol Corporation, Wickliffe, OH 44092-2298 (US)
(72) Inventor: METTATH, Sashikumar, Spring, TX 77386 (US); CHANG, Zen-Yu, Conroe, TX 77385 (US)
(74) Representative: Bradley, Josephine Mary
(86) International application number: PCT/US2016/027094
(87) International publication number: WO 2016/168177

(56) References cited:
- US-A- 2 925 429
- US-A- 3 720 695
- US-A- 3 840 460
- US-A- 3 970 569
- US-A- 5 198 129
- US-A1- 2015 225 666

## Description

The invention relates an additive composition for a drilling fluid, as well as a method of increasing the lubricity and reducing the coefficient of friction of a drilling fluid. The additive composition contains a metal dithiophosphate compound which further enhances the lubricating effect.

### BACKGROUND OF THE INVENTION

Drilling fluids, also referred to as drilling muds, are frequently circulated in a wellbore during drilling operations in order to cool and lubricate the drilling apparatus, lift cuttings out of the wellbore and counterbalance the subterranean formation pressure encountered during drilling. One of the functions of a drilling fluid is to reduce the considerable torque associated with the rotating drill stem caused by the friction between the outside of the drill pipe and the wall of the well and/or casing strings. Drilling through offsets, deep wells and highly deviated or horizontal wells results in increased frictional forces, increasing the demand on the lubricating properties of the drilling fluids.

Oil or synthetic-based muds, or invert emulsions, are normally used to drill swelling or sloughing shales, salt, gypsum, anhydrite or other evaporite formations, hydrogen sulfide-containing formations, and hot (greater than about 149 °C (300 degrees Fahrenheit)) holes, but may be used in other holes penetrating a subterranean formation as well. These non-aqueous based drilling fluids typically contain oil or a synthetic oil or other synthetic material or synthetic fluid ("synthetic") as the continuous phase and may also contain water which is dispersed in the continuous phase by emulsification so that there is no distinct layer of water in the fluid. The term "oil mud" or "oil or synthetic-based mud" typically means an invert oil or synthetic mud emulsion or invert emulsion. An all oil mud simply comprises 100% oil by volume as the liquid phase; that is, there is no aqueous internal phase. An invert emulsion drilling fluid may commonly comprise between about 50:50 to 95:5 by volume oil phase to water phase.

In industry drilling operations, attempts have been made to reduce friction through oil based mud solutions containing various types of additives. Diesel and other mineral oils are also often used as lubricants.

US 2,925,429 is directed towards providing new and useful compositions which have a hydrophile-hydrophobe balance which makes them especially useful as demulsifiers for water-in-oil petroleum emulsion and for other uses where such a hydrophile-hydrophobe balance is necessary or desirable. US 2,925,429 discloses the product of the reaction at 150-300°C of castor oil, an organic dicarboxy acid and a polyoxyalkylene compound having an average molecular weight between 1700 and 7500 from the group consisting of glycols and monoethers of glycols in which the oxyakylene groups consist essentially of oxyethylene and oxypropylene groups and the weight ratio of oxyethylene to oxypropylene is at least 1:4 and not greater than 4:1, the molar ratio of dicarboxy acid to castor oil being at least 1:3.

US 3,840,460 relates to a composition for preventing catastrophic vibration of a drill string during slim hole drilling and discloses a composition useful in a drilling fluid to increase the lubricity thereof, said composition consisting essentially of at least about 40 weight percent sulfurized lard oil, at least about 10 weight percent mineral oil, and at least about 1 weight percent halogenated paraffin, said composition containing greater than 2 weight percent total halogen and greater than 5 weight percent total sulfur. There can be additionally present in the composition at least one of Na sulfonate, Ca sulfonate, and Zn dithiophosphate, each being present in an amount in the range of about 1 to about 30 weight percent.

### SUMMARY OF THE INVENTION

The invention described herein provides an additive composition for a drilling fluid as defined in the appended claims, which includes the reaction product of i) at least one triglyceride of a hydroxy fatty acid; ii) at least one dicarboxylic acid or an ester or anhydride thereof; and iii) at least one polyalkylene glycol, and further comprises a metal dithiophosphate compound.

The hydroxy fatty acid comprises one or more of 2-hydroxylinolenic acid, 2-hydroxyoleic acid, 2-hydroxytetraconsanic acid, 2-hydroxy-15-tetracosenic acid, 2-hydroxy palmitic acid, 10-hydroxy-2-decenoic acid, 3,10-dihydroxydecanoic acid, 8-hydroxyoctanoic acid, w-hydroxy octadecenoic acid, 15-hydroxylinoleate, 12-hydroxy-9-octadecenoic acid, 12-hydroxystearic acid, 14-hydroxy-11-eicosenoic acid, 11-hydroxy hexadecanoic acid, 15-hydroxy-hexadecanoic acid, or 17-hydroxy-octadecanoic acid.

The dicarboxylic acid is adipic acid.

The polyalkylene glycol is one or more of polyethylene glycol or polypropylene glycol.

The invention described herein further provides the additive composition in which the polyalkylene glycol comprises polypropylene glycol having a Mn of from 200 to 10,000.

The invention described herein further provides the additive composition in which the polyalkylene glycol comprises polypropylene glycol having a Mn of less than 2000.

The invention described herein further provides the additive composition in which the additive composition includes the reaction product of i) a triglyceride of the hydroxy fatty acid; ii) adipic acid; and c) polypropylene glycol.

The invention described herein further provides the additive composition including a metal dialkyl dithiophosphate compound.

The invention described herein further provides the additive composition in which the metal dialkyl dithiophosphate compound comprises zinc dialkyldithiophosphate.

The ratio of the additive to the metal dithiophosphate compound is from 9:1 to 1:9.

The invention described herein further provides a drilling fluid including the additive composition as defined and a petroleum-based hydrocarbon fluid.

The invention described herein further provides a drilling fluid which is an oil-based drilling fluid.

The invention described herein further provides a drilling fluid as defined in the appended claims including a petroleum-based hydrocarbon fluid, a synthetic hydrocarbon fluid or mixtures thereof and the additive composition of the invention.

The invention described herein further provides a drilling fluid in which the petroleum based hydrocarbon fluid or synthetic hydrocarbon fluid includes diesel, kerosene, jet-fuel, white oils, mineral oils, mineral seal oils, hydrogenated oil and combinations thereof.

The invention described herein further includes a drilling fluid in which the additive composition is added to the drilling fluid in an amount from 0.5 wt% to 2.0 wt%.

The invention described herein further provides a method of lubricating a drilling fluid as defined in the appended claims including adding to the drilling fluid the additive composition of the invention.

Also disclosed herein is a method of increasing the lubricity and decreasing the coefficient of friction of a drilling fluid containing a hydrocarbon fluid by adding to the hydrocarbon an additive composition including the reaction product of i) at least one triglyceride of a hydroxy fatty acid; ii) at least one dicarboxylic acid or an ester or anhydride thereof; and iii) at least one polyalkylene glycol.

Also disclosed herein is the method in which the coefficient of friction of the well treatment fluid is decreased in an amount of at least 10%.

Also disclosed herein is the method in which the hydrocarbon includes a petroleum-based hydrocarbon fluid or a synthetic hydrocarbon fluid.

### DETAILED DESCRIPTION OF THE INVENTION

Various preferred features and embodiments will be described below by way of non-limiting illustration.

The additive composition described herein is a polymeric ester prepared from the reaction of at least one triglyceride of a hydroxy fatty acid, a dicarboxylic acid or an ester or anhydride thereof, and a polyalkylene glycol, as defined in the appended claims. The additive composition described herein is effective in one or more of increasing the lubricity and decreasing the coefficient of friction of a well treatment composition. The additive composition includes a metal dithiophosphate, which can act in combination with the polymeric ester to produce a synergistic effect and provide increased lubricity and/or a reduced coefficient of friction to a well treatment fluid.

### The Hydrocarbon (Oil) Component

In one embodiment, hydrocarbon base fluid for use in this invention include, without limitation, synthetic hydrocarbon fluids, petroleum based hydrocarbon fluids, natural hydrocarbon (non-aqueous) fluids or other similar hydrocarbons or mixtures or combinations thereof. The hydrocarbon fluids for use in the present invention have viscosities ranging from about 3×10⁻⁶ to about 600×10⁻⁶ m²/s (3 to about 600 centistokes). Examples of such hydrocarbon fluids include poly-α-olefins, polybutenes, polyolesters, biodiesels, simple low molecular weight fatty esters of vegetable or vegetable oil fractions, simple esters of alcohols such as Exxate™ from Exxon Chemicals, vegetable oils, animal oils or esters, other essential oil, diesel, diesel having a low or high sulfur content, kerosene, jet-fuel, white oils, mineral oils, mineral seal oils, hydrogenated oil such as PetroCanada™ HT-40N or IA-35 or similar oils produced by Shell Oil Company, internal olefins (IO) having between about 12 and 20 carbon atoms, linear alpha olefins having between about 14 and 20 carbon atoms, poly-α-olefins having between about 12 and about 20 carbon atoms, isomerized α-olefins (IAO) having between about 12 and about 20 carbon atoms, VM&P Naptha, Linparb, parafins having between 13 and about 16 carbon atoms, HF-1000 (produced by Sasol, USA), and mixtures or combinations thereof.

Suitable poly-α-olefins (PAOs) include, without limitation, polyethylenes, polypropylenes, polybutenes, polypentenes, polyhexenes, polyheptenes, higher PAOs, copolymers thereof, and mixtures thereof. Exemplary examples of PAOs include PAOs sold by Mobil Chemical Company as SHF™ fluids and PAOs sold formerly by Ethyl Corporation under the name ETHYLFLO™ and currently by Albemarle Corporation under the trade name DURASYN™. Such fluids include those specified as ETHYLFLO™ 162, 164, 166, 168, 170, 174, and 180. Well suited PAOs for use in this invention include bends of about 56% of ETHYLFLO™ now DURASYN™ 174 and about 44% of ETHYLFLO™ now DURASYN™ 168. Other examples of PAO's include Chevron Phillips Grades PAO 2, PAO 4, PAO 6 and PAO 8 based on C₁₀ alpha olefins, and PAO 2.5, PAO 5, PAO 7 and PAO 9 based on C₁₂ alpha olefins.

In some embodiments, the polybutenes include, without limitation, those sold by Amoco Chemical Company and Exxon Chemical Company under the trade names INDOPOL and PARAPOL, respectively. Well suited polybutenes for use in this invention include Amoco's INDOPOL "L" and "H" series, such as H-100, H-300, H-6000, and H-21000.

In some embodiments, the polyolesters include, without limitation, neopentyl glycols, trimethylolpropanes, pentaerythriols, dipentaerythritols, and diesters such as dioctylsebacate (DOS), diactylazelate (DOZ), and dioctyladipate. Exemplary examples of polyolester include, without limitation, neopentyl glycols, trimethylolpropanes, pentaerythriols, dipentaerythritols, and diesters such as dioctylsebacate (DOS), diactylazelate (DOZ), and dioctyladipate.
Exemplary examples of petroleum based fluids include, without limitation, white mineral oils, paraffinic oils, and medium-viscosity-index (MVI) naphthenic oils having viscosities ranging from about 3×10⁻⁶ to about 600×⁻⁶ m²/s (3 to about 600 centistokes) at 40° C. Exemplary examples of white mineral oils include those sold by Witco Corporation, Arco Chemical Company, PSI, and Penreco. Exemplary examples of paraffinic oils include solvent neutral oils available from Exxon Chemical Company, high-viscosity-index (HVI) neutral oils available from Shell Chemical Company, and solvent treated neutral oils available from Arco Chemical Company. Exemplary examples of MVI naphthenic oils include solvent extracted coastal pale oils available from Exxon Chemical Company, MVI extracted/acid treated oils available from Shell Chemical Company, and naphthenic oils sold under the names HYDROCAL™ and CALSOL™ by Calumet and hydrogenated oils such as HT-40N and IA-35 from PETROCANADA™ or Shell Oil Company or other similar hydrogenated oils. In some embodiments, the vegetable oils include, without limitation, castor oils, corn oil, olive oil, sunflower oil, sesame oil, peanut oil, palm oil, palm kernel oil, coconut oil, butter fat, canola oil, rape seed oil, flax seed oil, cottonseed oil, linseed oil, other vegetable oils, modified vegetable oils such as crosslinked castor oils and the like, and mixtures thereof. Exemplary examples of animal oils include, without limitation, tallow, mink oil, lard, other animal oils, and mixtures thereof. Other essential oils will work as well. Of course, mixtures of all the above identified oils can be used as well.

### The Hydroxy Fatty Acid Component

The additive composition of the invention described herein is made using i) a triglyceride of a hydroxy fatty acid as defined in the appended claims. The number of the hydroxyl groups in these may be generally 1 or more, or in one embodiment 2.

The hydroxy fatty acid component, in one embodiment, includes saturated fatty acids having one hydroxyl group and one carboxyl group.

Specific examples of those having a linear alkyl group in the alkyl moiety may include 2-hydroxypalmitic acid and 12-hydroxystearic acid.

The hydroxy fatty acid may be 2-hydroxylinolenic acid, 2-hydroxyoleic acid, 2-hydroxytetraconsanic acid, 2-hydroxy-15-tetracosenic acid, 2-hydroxy palmitic acid, 10-hydroxy-2-decenoic acid, 3,10-dihydroxydecanoic acid, 8-hydroxyoctanoic acid, w-hydroxy octadecenoic acid, 15-hydroxylinoleate, 12-hydroxy-9-octadecenoic acid, 12-hydroxystearic acid, 14-hydroxy-11-eicosenoic acid, 11-hydroxy hexadecanoic acid, 15-hydroxy-hexadecanoic acid, or 17-hydroxy-octadecanoic acid. In some embodiments, the hydroxy fatty acid may be 12-hydroxy-9-octadecenoic acid (ricinoleic acid) or 12-hydroxy stearic acid. In one embodiment the hydroxy fatty acid is 12-hydroxy-9-octadecenoic acid.

### The Dicarboxylic Acid Component

The dicarboxylic acid is adipic acid.

In some embodiments, the dicarboxylic acid of the invention may also be derived from an ester or anhydride of one or more acids described above or combinations of such materials. Suitable esters include, in one embodiment, lower alkyl esters such as dimethyl adipate or diethyl adipate.

### The Polyalkylene Glycol Component

The drilling or completion fluid compositions described herein are made using ii) a polyalkylene glycol component which is one or more of polyethylene glycol or polypropylene glycol.

Suitable polyalkylene glycols include polyether polyols derived from a diol or polyol having a total of from 2 to 15 carbon atoms, in some embodiments an alkyl diol or glycol which is reacted with an ether comprising an alkylene oxide having from 2 to 6 carbon atoms, typically ethylene oxide or propylene oxide or mixtures thereof. For example, hydroxyl functional polyethers can be produced by first reacting propylene glycol with propylene oxide followed by subsequent reaction with ethylene oxide. Primary hydroxyl groups resulting from ethylene oxide are more reactive than secondary hydroxyl groups and thus are preferred. Useful commercial polyalkylene oxides include poly(ethylene glycol) comprising ethylene oxide reacted with ethylene glycol, and poly(propylene glycol) comprising propylene oxide reacted with propylene glycol. The various polyalkylene glycols generally have a number average molecular weight (Mn) as determined by assay of the terminal functional groups which is an average molecular weight of at least about 150, or about 600, such as from about 700 to about 10,000, from about 1,450 to about 5,000, or from about 1,450 to about 2,500 or about 1,000, or even 2,000.

In some embodiments, the polyalkylene glycol component includes poly(propylene glycol), poly(ethylene glycol), copolymers of poly(ethylene glycol) and poly(propylene glycol), and the like, or combinations thereof. In some embodiments the polyalkylene glycol component includes poly(propylene glycol).

### The Metal Thiophosphate Compound

The additive composition includes a metal thiophosphate compound. Zinc dialkyldithiophosphates may be described as primary zinc dialkyldithiophosphates or as secondary zinc dialkyldithiophosphates, depending on the structure of the alcohol used in its preparation. In some embodiments the compositions of the invention include primary zinc dialkyldithiophosphates. In some embodiments the compositions of the invention include secondary zinc dialkyldithiophosphates. In some embodiments the compositions of the invention include a mixture of primary and secondary zinc dialkyldithiophosphates. In some embodiments component (b) is a mixture of primary and secondary zinc dialkyldithiophosphates where the ratio of primary zinc dialkyldithiophosphates to secondary zinc dialkyldithiophosphates (one a weight basis) is at least 1:1, or even at least 1:1.2, or even at least 1:1.5 or 1:2, or 1:10. In some embodiments component (b) is a mixture of primary and secondary zinc dialkyldithiophosphates that is at least 50 percent by weight primary, or even at least 60, 70, 80, or even 90 percent by weight primary. In some embodiments component (b) is free of primary zinc dialkyldithiophosphates.

In embodiments which include the metal dithiophosphate, it will be present in the additive composition at a ratio of from about 1:1 to about 15:1 of polymeric ester to metal dithiophosphate, and in another embodiment from about 1:1 to 10:1, and in a further embodiment from about 2:1 to about 9:1.

### Additional Additives

The oil-based drilling muds may further contain certain customary components and additives.

In some embodiments, a thixotropic thickening and gelling agent may be used, for example, organophilic clays. The clays used may be any of those that have substantial base-exchange capacity. A variety of such materials are known to those skilled in the art, including Wyoming bentonite, montmorillonite, hectorite, attapulgite, illite, fullers earth, beidillite, saponite, vermiculite, zeolites, and the like. Wyoming swelling bentonite and hectorite are normally utilized. The organophilic clay content of the oil-based mud formulation will vary inversely as the density of the oil-mud. The organophilic clay content may range from about 71.25 to 85.5 kgm⁻³ (25 to 30 pounds per barrel (ppg)) in low densities, to almost 0 in high densities. In some embodiments, an amount from about 5.7 to about 42.75 kg of clay per m³ of mud (about 2 to about 15 pounds of clay per barrel of mud) will be used. The degree of suspension or hole cleaning required will have an impact on the clay concentration, as is well known to those skilled in the art.

Emulsifiers, both invert and wetting agents, include those normally used, including alkali and alkaline earth metal salts of fatty acids, rosin acids, tall oil acids, the synthetic emulsifiers such as alkyl aromatic sulfonates, aromatic alkyl sulfonates, long chain sulfates, oxidized tall oilts, carboxylated-2-alkyl imidazolines, imidazoline salts, amido amines, alkoxy phenols, polyalkoxy alcohols, alkyl phenols, high molecular weight alcohols, and the like.

Wetting agents that may be suitable for use in the invention include, crude tall oil, oxidized crude tall oil, surfactants, organic phosphate esters, modified imidazolines and amidoamines, alkyl aromatic sulfates and sulfonates, and the like, and combinations or derivatives of these. Versawet® and Versawet®NS are examples of commercially available wetting agents manufactured and distributed by M-I L.L.C. that may be used in this invention. Silwet L-77, L-7001, L7605 and L-7622 are examples of commercially available surfactants and wetting agents manufactured and distributed by Union Carbide Chemical Company Inc.

Fluid loss control agents typically act by coating the walls of the borehole as the well is being drilled. Suitable fluid loss control agents which may find utility in the invention include modified lignites, asphaltic compounds, Gilsonite® organophilic humates prepared by reacting humic acid with amides or polyalkylene polyamines, and other non-toxic fluid loss additives. Typically, fluid loss control agents are added in amounts less than about 10% and preferably less than about 5% by weight of the fluid.

Further additives can include corrosion inhibitors, for example, based on ammonium salts of organic carboxylic acids, said salts tending to form films, or on heterocyclic aromatics in the case of nonferrous metal corrosion protection; antioxidants or stabilizers, for example, based on amines, further conventional emulsifiers; antistats; metallocenes such as ferrocene; lubricity improvers such as particular fatty acids, alkenylsuccinic esters, bis(hydroxyalkyl) fatty amines, hydroxyacetamides or castor oil; dyes (markers), fluid loss additives (e.g., polymers), substances for adjusting the density, rheology modifiers, and substances which build up a filtercake (for example, bentonite or clay), or lime.

The invention provides a method of lubricating a drilling fluid. The method includes the steps of: adding to the drilling fluid the reaction product of i) at least one triglyceride of an hydroxy fatty acid; ii) at least one dicarboxylic acid or ester or anhydride thereof; and iii) at least one polyalkylene glycol.

The invention further provides a method for the preparation of an additive composition for increasing the lubricity and decreasing the coefficient of friction of a drilling fluid. The method includes the steps of mixing the components until they are substantially or wholly dissolved. The order of addition of the composition components is not overly limited. The optional additives may be mixed in at the same time as the other components or at a later time. In one embodiment, the components of the additive composition are present such that the total ratio of equivalent acid groups of hydroxy fatty acid and dicarboxylic acid to the hydryoxyl groups in the polyalkylene glycol is from about 0.3 to about 2.5, and in one embodiment from about 0.4 to about 1.5.

In some embodiments, optional additives include any of those described above. In some embodiments, these optional additives may be added such that they are present in the overall compositions in the range of about 0, 0.01, 0.1 or even 0.25 wt%.

The invention further provides a method of increasing the lubricity and decreasing the coefficient of friction of a drilling fluid comprising adding to the drilling fluid an additive composition comprising the reaction product of i) at least one triglyceride of an hydroxy fatty acid; ii) at least one dicarboxylic acid or an ester or anhydride thereof; and iii) at least one polyalkylene glycol. In the method, in some embodiments, the coefficient of friction may be reduced by at least 5%, or by at least 10%, or by at least 20%, or from about 5% to about 95%, or from 10% to about 85%, or even from about 25% to about 75%.

### Industrial application

The additive composition described herein can be, in some embodiments, utilized in drilling fluids to increase the lubricity of the drilling fluid, and in some embodiments, to reduce the coefficient of friction of the drilling fluid. In some embodiments, the drilling fluid is an oil-based drilling fluid. The additive composition may also clean debris and residue from the formation after drilling the wellbore so that the well can be completed and prepared for production.

The additive composition of the invention described herein may be present in a drilling fluid in an amount, in one embodiment, from about 0.5 wt% to about 3 wt%, and in one embodiment from about 1 wt% to about 3 wt%, and in one embodiment from at least about 1 wt%, or from at least about 2 wt%.

The amount of each chemical component described is presented exclusive of any solvent, which may be customarily present in the commercial material, that is, on an active chemical basis, unless otherwise indicated. However, unless otherwise indicated, each chemical or composition referred to herein should be interpreted as being a commercial grade material which may contain the isomers, by-products, derivatives, and other such materials which are normally understood to be present in the commercial grade.

It is known that some of the materials described above may interact in the final formulation, so that the components of the final formulation may be different from those that are initially added. For instance, metal ions (of, e.g., a detergent) can migrate to other acidic or anionic sites of other molecules. The products formed thereby, including the products formed upon employing the composition of the present invention in its intended use, may not be susceptible of easy description. Nevertheless, all such modifications and reaction products are included within the scope of the present invention; the present invention encompasses the composition prepared by admixing the components described above.

### EXAMPLES

The invention will be further illustrated by the following examples, which sets forth particularly advantageous embodiments. While the examples are provided to illustrate the present invention, they are not intended to limit it.

An oil-based drilling mud was prepared according to the formulation set forth in Table 2. Lubricating compositions were then prepared according to the formulations set forth in Tables 3-5 below. The lubricity of the lubricating fluids was evaluated using an EP Lubricity Tester, manufactured by OFI Testing Equipment, Inc., wherein fluid resistance of the fluids was measured by application of 34,500 to 69,000 kPa (150 inch-pounds of force, the equivalent of 5,000 to 10,000 psi - pressure on the fluid) between two hardened steel surfaces, a block and a ring rotating at 60 rpm for 5 minutes. Tables 3 through 5 set forth the coefficients of friction of the oil-based muds and inventive formulations at 21 °C.

**Table 2 Drilling Mud**

| Drilling Mud Composition - Mud A | |
|---|---|
| Component | Amount (g) |
| Diesel | 177 |
| FM Vis | 4 |
| premium Vis | 1 |
| Lime | 4 |
| FLR Gilsonite | 4 |
| ABS Mul | 8 |
| 25% Cacl2 Brine | 151 |
| Barite | 10 |

**Table 3**

| Coefficient of Friction in Diesel with Inventive Composition A | | | |
|---|---|---|---|
| Example No. | Sample Description | **Lubricity Value** | **% reduction in CoF** |
| | DI water | ------ | ----- |
| Mud A | See Table 2 | 0.16 | ----- |
| 1 | Mud A + 2% Inventive Additive A | 0.145 | 9% |

| | | | |
|---|---|---|---|
| *Inventive Additive A is the reaction product of i) a polymeric ester of castor oil, ii) adipic acid and iii) PPG **All values are percent by weight | | | |

**Table 4**

| Coefficient of Friction in Diesel with Inventive Composition B* | | | |
|---|---|---|---|
| Example No. | Sample Description | **Lubricity Value** | **% reduction in CoF** |
| Mud A | See Table 2 | 0.133 | ------- |
| 2 | Mud A +1 wt% Composition B | 0.115 | 13% |
| | 1.95:1 | | |
| 3 | Mud A | 0.114 | |
| 4 | Mud A + 1 wt% ZDDP | 0.116 | |
| 4 | Mud A + 1 wt% Composition B | 0.093 | 18% |
| | 1:0.7 | | |
| 5 | Mud A + 1 wt% Composition B | 0.094 | 18% |
| | 1:0.23 | | |

| | | | |
|---|---|---|---|
| *Inventive Composition B is the same as Inventive Composition A but further includes zinc dialkyl dithiophosphate (ZDDP) in a ratio of Composition A:ZDDP of 1.95:1, 1:0.7 and 1:0.23 **All values are percent by weight | | | |

**Table 5**

| Coefficient of Friction in Diesel with Inventive Composition B* + PnB Ether** | | | |
|---|---|---|---|
| Example | Sample Description | Lubricity Value | % reduction in CoF |
| Mud A | | 0.164 | ------ |
| 7 | Mud A + 1 wt% Composition B + 1wt% PnB ether | 0.145 | 11.6% |
| | 6:1 | | |
| Mud A | | 0.102 | ------ |
| 8 | Mud A +1wt% Composition B | 0.08 | 21% |
| | 1:1 | | |
| Mud A | | 0.092 | |
| 9 | Mud A + 1wt% Composition B | 0.076 | 17% |
| | 1:9 | | |

| | | | |
|---|---|---|---|
| *Composition B is the same as Inventive Composition A but further includes ZDP in a ratio of Composition A:ZDDP of 6:1, 1:1 or 1:9. *1 wt% PnB Ether ***All values are percent by weight | | | |

As illustrated in Tables 4 and 5, it can be seen that the addition of a metal dialkyl dithiophosphate to the additive composition provides a synergistic effect, thereby lowering the coefficient of friction as well as increasing the percent reduction in coefficient of friction in an amount greater than a composition containing only the metal dialkyl dithiophosphate or only the additive composition. The addition of PnB ether as a solvent reduces the viscosity of the lubricating composition while not having an adverse effect on the reduction of the coefficient of friction.

The mention of any document is not an admission that such document qualifies as prior art or constitutes the general knowledge of the skilled person in any jurisdiction. Except in the Examples, or where otherwise explicitly indicated, all numerical quantities in this description specifying amounts of materials, reaction conditions, molecular weights, number of carbon atoms, and the like, are to be understood as modified by the word "about." It is to be understood that the upper and lower amount, range, and ratio limits set forth herein may be independently combined. Similarly, the ranges and amounts for each element of the invention can be used together with ranges or amounts for any of the other elements.

As used herein, the transitional term "comprising," which is synonymous with "including," "containing," or "characterized by," is inclusive or open-ended and does not exclude additional, un-recited elements or method steps. However, in each recitation of "comprising" herein, it is intended that the term also encompass, as alternative embodiments, the phrases "consisting essentially of' and "consisting of," where "consisting of' excludes any element or step not specified and "consisting essentially of' permits the inclusion of additional un-recited elements or steps that do not materially affect the essential or basic and novel characteristics of the composition or method under consideration.

## Claims

1. An additive composition for a drilling fluid, comprising the reaction product of i) at least one triglyceride of a hydroxy fatty acid, wherein the hydroxy fatty acid comprises one or more of 2-hydroxylinolenic acid, 2-hydroxyoleic acid, 2-hydroxytetraconsanic acid, 2-hydroxy-15-tetracosenic acid, 2-hydroxy palmitic acid, 10-hydroxy-2-decenoic acid, 3,10-dihydroxydecanoic acid, 8-hydroxyoctanoic acid, w-hydroxy octadecenoic acid, 15-hydroxylinoleate, 12-hydroxy-9-octadecenoic acid, 12-hydroxystearic acid, 14-hydroxy-11-eicosenoic acid, 11-hydroxy hexadecanoic acid, 15-hydroxy-hexadecanoic acid, or 17-hydroxy-octadecanoic acid; ii) adipic acid or an ester or anhydride thereof; and iii) at least one polyalkylene glycol, wherein the at least one polyalkylene glycol is one or more of polyethylene glycol or polypropylene glycol, and further comprising a metal dithiophosphate compound, wherein the ratio of the additive to the metal dithiophosphate compound is from 9:1 to 1:9.

2. The additive composition of claim 1, wherein the hydroxy fatty acid comprises one or more of 2-hydroxylinolenic acid, 2-hydroxyoleic acid, 2-hydroxy palmitic acid, 12-hydroxy-9-octadecenoic acid or 12-hydroxystearic acid.

3. The additive composition of claim 1 or claim 2, wherein the polyalkylene glycol comprises polypropylene glycol having a Mn of from 200 to 10,000 or a Mn of less than 2000.

4. The additive composition of claim 1, comprising:
a) the reaction product of i) a triglyceride of a hydroxy fatty acid, wherein the hydroxy fatty acid comprises one or more of 2-hydroxylinolenic acid, 2-hydroxyoleic acid, 2-hydroxytetraconsanic acid, 2-hydroxy-15-tetracosenic acid, 2-hydroxy palmitic acid, 10-hydroxy-2-decenoic acid, 3,10-dihydroxydecanoic acid, 8-hydroxyoctanoic acid, w-hydroxy octadecenoic acid, 15-hydroxylinoleate, 12-hydroxy-9-octadecenoic acid, 12-hydroxystearic acid, 14-hydroxy-11-eicosenoic acid, 11-hydroxy hexadecanoic acid, 15-hydroxy-hexadecanoic acid, or 17-hydroxy-octadecanoic acid; ii) adipic acid; and iii) polypropylene glycol.

5. The additive composition of any one of claims 1 to 4, wherein the metal dithiophosphate compound comprises zinc dialkyldithiophosphate.

6. A drilling fluid including the additive composition as defined in claim 1 and a petroleum-based hydrocarbon fluid, a synthetic hydrocarbon fluid or mixtures thereof.

7. The drilling fluid according to claim 6, which is an oil-based drilling fluid and wherein the drilling fluid includes a petroleum-based hydrocarbon fluid.

8. The drilling fluid of claim 7, wherein the petroleum based hydrocarbon fluid or synthetic hydrocarbon fluid comprises diesel, kerosene, jet-fuel, white oils, mineral oils, mineral seal oils, hydrogenated oil and combinations thereof.

9. The drilling fluid of any one of claims 6 to 8, wherein the additive composition is present in the drilling fluid in an amount from 0.5 wt% to 2.0 wt%.

10. A method of lubricating a drilling fluid, comprising:
adding to the drilling fluid an additive composition comprising the reaction product of i) at least one triglyceride of a hydroxy fatty acid, wherein the hydroxy fatty acid comprises one or more of 2-hydroxylinolenic acid, 2-hydroxyoleic acid, 2-hydroxytetraconsanic acid, 2-hydroxy-15-tetracosenic acid, 2-hydroxy palmitic acid, 10-hydroxy-2-decenoic acid, 3,10-dihydroxydecanoic acid, 8-hydroxyoctanoic acid, w-hydroxy octadecenoic acid, 15-hydroxylinoleate, 12-hydroxy-9-octadecenoic acid, 12-hydroxystearic acid, 14-hydroxy-11-eicosenoic acid, 11-hydroxy hexadecanoic acid, 15-hydroxy-hexadecanoic acid, or 17-hydroxy-octadecanoic acid; ii) adipic acid or an ester or anhydride thereof; and iii) at least one polyalkylene glycol wherein the at least one polyalkylene is one or more of polyethylene glycol or polypropylene glycol, and further comprising a metal dithiophosphate compound, wherein the ratio of the additive to the metal dithiophosphate compound is from 9:1 to 1:9.

11. Use of an addtitive composition to increase the lubricity and/or decrease the coefficient of friction of a drilling fluid containing a hydrocarbon fluid, wherein the additive composition comprises the reaction product of i) at least one triglyceride of a hydroxy fatty acid, wherein the hydroxy fatty acid comprises one or more of 2-hydroxylinolenic acid, 2-hydroxyoleic acid, 2-hydroxytetraconsanic acid, 2-hydroxy-15-tetracosenic acid, 2-hydroxy palmitic acid, 10-hydroxy-2-decenoic acid, 3,10-dihydroxydecanoic acid, 8-hydroxyoctanoic acid, w-hydroxy octadecenoic acid, 15-hydroxylinoleate, 12-hydroxy-9-octadecenoic acid, 12-hydroxystearic acid, 14-hydroxy-11-eicosenoic acid, 11-hydroxy hexadecanoic acid, 15-hydroxy-hexadecanoic acid, or 17-hydroxy-octadecanoic acid; ii) adipic acid or an ester or anhydride thereof; and iii) at least one polyalkylene glycol, wherein the at least one polyalkylene glycol is one or more of polyethylene glycol or polypropylene glycol, and further comprising a metal dithiophosphate compound, wherein the ratio of the additive to the metal dithiophosphate compound is from 9:1 to 1:9.

12. The use of claim 11, wherein the hydrocarbon comprises a petroleum-based hydrocarbon fluid or a synthetic hydrocarbon fluid.

## Patentansprüche

1. Additivzusammensetzung für ein Bohrfluid, umfassend das Reaktionsprodukt von i) zumindest einem Triglycerid mit einer Hydroxyfettsäure, wobei die Hydroxyfettsäure eine oder mehrere umfasst von 2-Hydroxylinolensäure, 2-Hydroxyölsäure, 2-Hydroxytetracosansäure, 2-Hydroxy-15-tetracosensäure, 2-Hydroxypalmitinsäure, 10-Hydroxy-2-decensäure, 3,10-Dihydroxydecansäure, 8-Hydroxyoctansäure, w-Hydroxyoctadecensäure, 15-Hydroxylinoleat, 12-Hydroxy-9-octadecensäure, 12-Hydroxystearinsäure, 14-Hydroxy-11-eicosensäure, 11-Hydroxyhexadecansäure, 15-Hydroxy-hexadecansäure oder 17-Hydroxy-octadecansäure; ii) Adipinsäure oder einem Ester oder Anhydrid davon; und iii) zumindest einem Polyalkylenglykol, wobei das zumindest eine Polyalkylenglykol eines oder mehr von Polyethylenglykol oder Polypropylenglykol ist, und weiterhin umfassend eine Metalldithiophosphatverbindung, wobei das Verhältnis vom Additiv zur Metalldithiophosphatverbindung 9:1 bis 1:9 beträgt.

2. Additivzusammensetzung nach Anspruch 1, wobei die Hydroxyfettsäure eine oder mehrere von 2-Hydroxylinolensäure, 2-Hydroxyölsäure, 2-Hydroxypalmitinsäure, 12-Hydroxy-9-octadecensäure oder 12-Hydroxystearinsäure umfasst.

3. Additivzusammensetzung nach Anspruch 1 oder Anspruch 2, wobei das Polyalkylenglykol Polypropylenglykol mit einem Mn von 200 bis 10000 oder einem Mn von weniger als 2000 umfasst.

4. Additivzusammensetzung nach Anspruch 1, umfassend:
a) das Reaktionsprodukt von i) einem Triglycerid mit einer Hydroxyfettsäure, wobei die Hydroxyfettsäure eine oder mehrere umfasst von 2-Hydroxylinolensäure, 2-Hydroxyölsäure, 2-Hydroxytetracosansäure, 2-Hydroxy-15-tetracosensäure, 2-Hydroxypalmitinsäure, 10-Hydroxy-2-decensäure, 3,10-Dihydroxydecansäure, 8-Hydroxyoctansäure, w-Hydroxyoctadecensäure, 15-Hydroxylinoleat, 12-Hydroxy-9-octadecensäure, 12-Hydroxystearinsäure, 14-Hydroxy-11-eicosensäure, 11-Hydroxyhexadecansäure, 15-Hydroxy-hexadecansäure oder 17-Hydroxy-octadecansäure; ii) Adipinsäure; und iii) Polypropylenglykol.

5. Additivzusammensetzung nach einem der Ansprüche 1 bis 4, wobei die Metalldithiophosphatverbindung Zinkdialkyldithiophosphat umfasst.

6. Bohrfluid, einschließend die Additivzusammensetzung gemäß Definition in Anspruch 1 und ein Kohlenwasserstofffluid auf Erdölbasis, ein synthetisches Kohlenwasserstofffluid oder Gemische davon.

7. Bohrfluid nach Anspruch 6, das ein Bohrfluid auf Ölbasis ist und wobei das Bohrfluid ein Kohlenwasserstofffluid auf Erdölbasis einschließt.

8. Bohrfluid nach Anspruch 7, wobei das Kohlenwasserstofffluid auf Erdölbasis oder das synthetische Kohlenwasserstofffluid Dieselöl, Petroleum, Flugturbinenkraftstoff bzw. Jet Fuel, Weißöle, Mineralöle, Mineral-Seal-Öle, hydriertes Öl und Kombinationen davon umfasst.

9. Bohrfluid nach einem der Ansprüche 6 bis 8, wobei die Additivzusammensetzung im Bohrfluid in einer Menge von 0,5 Gew.-% bis 2,0 Gew.-% vorhanden ist.

10. Verfahren zum Versehen eines Bohrfluids mit Schmiermittel, umfassend:
Zugeben, zum Bohrfluid, einer Additivzusammensetzung, umfassend das Reaktionsprodukt von i) zumindest einem Triglycerid mit einer Hydroxyfettsäure, wobei die Hydroxyfettsäure eine oder mehrere umfasst von 2-Hydroxylinolensäure, 2-Hydroxyölsäure, 2-Hydroxytetracosansäure, 2-Hydroxy-15-tetracosensäure, 2-Hydroxypalmitinsäure, 10-Hydroxy-2-decensäure, 3,10-Dihydroxydecansäure, 8-Hydroxyoctansäure, w-Hydroxyoctadecensäure, 15-Hydroxylinoleat, 12-Hydroxy-9-octadecensäure, 12-Hydroxystearinsäure, 14-Hydroxy-11-eicosensäure, 11-Hydroxyhexadecansäure, 15-Hydroxy-hexadecansäure oder 17-Hydroxy-octadecansäure; ii) Adipinsäure oder einem Ester oder Anhydrid davon; und iii) zumindest einem Polyalkylenglykol, wobei das zumindest eine Polyalkylenglykol eines oder mehr von Polyethylenglykol oder Polypropylenglykol ist, und weiterhin umfassend eine Metalldithiophosphatverbindung, wobei das Verhältnis vom Additiv zur Metalldithiophosphatverbindung 9:1 bis 1:9 beträgt.

11. Verwendung einer Additivzusammensetzung zur Steigerung der Schmierfähigkeit und/oder Senkung des Reibungskoeffizienten eines Kohlenwasserstofffluid enthaltenden Bohrfluids, die Additivzusammensetzung umfassend das Reaktionsprodukt von i) zumindest einem Triglycerid mit einer Hydroxyfettsäure, wobei die Hydroxyfettsäure eine oder mehrere umfasst von 2-Hydroxylinolensäure, 2-Hydroxyölsäure, 2-Hydroxytetracosansäure, 2-Hydroxy-15-tetracosensäure, 2-Hydroxypalmitinsäure, 10-Hydroxy-2-decensäure, 3,10-Dihydroxydecansäure, 8-Hydroxyoctansäure, w-Hydroxyoctadecensäure, 15-Hydroxylinoleat, 12-Hydroxy-9-octadecensäure, 12-Hydroxystearinsäure, 14-Hydroxy-11-eicosensäure, 11-Hydroxyhexadecansäure, 15-Hydroxy-hexadecansäure oder 17-Hydroxy-octadecansäure; ii) Adipinsäure oder einem Ester oder Anhydrid davon; und iii) zumindest einem Polyalkylenglykol, wobei das zumindest eine Polyalkylenglykol eines oder mehr von Polyethylenglykol oder Polypropylenglykol ist, und weiterhin umfassend eine Metalldithiophosphatverbindung, wobei das Verhältnis vom Additiv zur Metalldithiophosphatverbindung 9:1 bis 1:9 beträgt.

12. Verwendung nach Anspruch 11, wobei der Kohlenwasserstoff ein Kohlenwasserstofffluid auf Erdölbasis oder ein synthetisches Kohlenwasserstofffluid umfasst.

## Revendications

1. Composition d'additif pour un fluide de forage, comprenant le produit de réaction de i) au moins un triglycéride d'un acide gras hydroxy, où l'acide gras hydroxy comprend un ou plusieurs parmi: acide 2-hydroxylinolénique, acide 2-hydroxyoléique, acide 2-hydroxytétraconsanique, acide 2-hydroxy-15-tétracosénique, acide 2-hydroxypalmitique, acide 10-hydroxy-2-décénoïque, acide 3,10-dihydroxydécanoïque, acide 8-hydroxyoctanoïque, acide w-hydroxy-octadécénoïque, 15-hydroxylinoléate, acide 12-hydroxy-9-octadécénoïque, acide 12-hydroxystéarique, acide 14-hydroxy-11-eicosénoïque, acide 11-hydroxy-hexadécanoïque, acide 15-hydroxy-hexadécanoïque ou acide 17-hydroxy-octadécanoïque; ii) l'acide adipique ou un ester ou un anhydride de celui-ci; et iii) au moins un polyalkylène glycol, où le au moins un polyalkylène glycol est un ou plusieurs parmi: polyéthylène glycol ou polypropylène glycol, et comprenant en outre un composé de dithiophosphate métallique, où le rapport de l'additif sur le composé de dithiophosphate métallique est de 9:1 à 1:9.

2. Composition d'additif selon la revendication 1, dans laquelle l'acide gras hydroxy comprend un ou plusieurs parmi: acide 2-hydroxylinolénique, acide 2-hydroxyoléique, acide 2-hydroxypalmitique, acide 12-hydroxy-9-octadécénoïque ou acide 12-hydroxystéarique.

3. Composition d'additif selon la revendication 1 ou la revendication 2, dans laquelle le polyalkylène glycol comprend un polypropylène glycol possédant un Mn de 200 à 10000 ou un Mn de moins de 2000.

4. Composition d'additif selon la revendication 1, comprenant:
a) le produit de réaction de i) un triglycéride d'un acide gras hydroxy, où l'acide gras hydroxy comprend un ou plusieurs parmi: acide 2-hydroxylinolénique, acide 2-hydroxyoléique, acide 2-hydroxytétraconsanique, acide 2-hydroxy-15-tétracosénique, acide 2-hydroxypalmitique, acide 10-hydroxy-2-décénoïque, acide 3,10-dihydroxydécanoïque, acide 8-hydroxyoctanoïque, acide w-hydroxy-octadécénoïque, 15-hydroxylinoléate, acide 12-hydroxy-9-octadécénoïque, acide 12-hydroxystéarique, acide 14-hydroxy-11-eicosénoïque, acide 11-hydroxy-hexadécanoïque, acide 15-hydroxy-hexadécanoïque ou acide 17-hydroxy-octadécanoïque; ii) l'acide adipique; et iii) un polypropylène glycol.

5. Composition d'additif selon l'une quelconque des revendications 1 à 4, dans laquelle le composé de dithiophosphate métallique comprend un dialkyldithiophosphate de zinc.

6. Fluide de forage comprenant la composition d'additif selon la revendication 1 et un fluide hydrocarbure à base de pétrole, un fluide hydrocarbure synthétique ou des mélanges de ceux-ci.

7. Fluide de forage selon la revendication 6, qui est un fluide de forage à base d'huile et où le fluide de forage inclut un fluide hydrocarbure à base de pétrole.

8. Fluide de forage selon la revendication 7, dans lequel le fluide hydrocarbure à base de pétrole ou le fluide hydrocarbure synthétique comprend: diesel, kérosène, carburant de turbomoteur, huiles blanches, huiles minérales, huiles d'étanchéité minérales, huile hydrogénée et des combinaisons de ceux-ci.

9. Fluide de forage selon l'une quelconque des revendications 6 à 8, dans lequel la composition d'additif est présente dans le fluide de forage dans une quantité de 0,5% en poids à 2,0% en poids.

10. Méthode pour la lubrification d'un fluide de forage, comprenant:
l'ajout au fluide de forage d'une composition d'additif comprenant le produit de réaction de i) au moins un triglycéride d'un acide gras hydroxy, où l'acide gras hydroxy comprend un ou plusieurs parmi: acide 2-hydroxylinolénique, acide 2-hydroxyoléique, acide 2-hydroxytétraconsanique, acide 2-hydroxy-15-tétracosénique, acide 2-hydroxypalmitique, acide 10-hydroxy-2-décénoïque, acide 3,10-dihydroxydécanoïque, acide 8-hydroxyoctanoïque, acide w-hydroxy-octadécénoïque, 15-hydroxylinoléate, acide 12-hydroxy-9-octadécénoïque, acide 12-hydroxystéarique, acide 14-hydroxy-11-eicosénoïque, acide 11-hydroxy-hexadécanoïque, acide 15-hydroxy-hexadécanoïque ou acide 17-hydroxy-octadécanoïque; ii) l'acide adipique ou un ester ou un anhydride de celui-ci; et iii) au moins un polyalkylène glycol, où le au moins un polyalkylène glycol est un ou plusieurs parmi: polyéthylène glycol ou polypropylène glycol, et comprenant en outre un composé de dithiophosphate métallique, où le rapport de l'additif sur le composé de dithiophosphate métallique est de 9:1 à 1:9.

11. Utilisation d'une composition d'additif pour augmenter le pouvoir lubrifiant et/ou diminuer le coefficient de frottement d'un fluide de forage contenant un fluide hydrocarbure, dans laquelle la composition d'additif comprend le produit de réaction de i) au moins un triglycéride d'un acide gras hydroxy, où l'acide gras hydroxy comprend un ou plusieurs parmi: acide 2-hydroxylinolénique, acide 2-hydroxyoléique, acide 2-hydroxytétraconsanique, acide 2-hydroxy-15-tétracosénique, acide 2-hydroxypalmitique, acide 10-hydroxy-2-décénoïque, acide 3,10-dihydroxydécanoïque, acide 8-hydroxyoctanoïque, acide w-hydroxy-octadécénoïque, 15-hydroxylinoléate, acide 12-hydroxy-9-octadécénoïque, acide 12-hydroxystéarique, acide 14-hydroxy-11-eicosénoïque, acide 11-hydroxy-hexadécanoïque, acide 15-hydroxy-hexadécanoïque ou acide 17-hydroxy-octadécanoïque; ii) l'acide adipique ou un ester ou un anhydride de celui-ci; et iii) au moins un polyalkylène glycol, où le au moins un polyalkylène glycol est un ou plusieurs parmi: polyéthylène glycol ou polypropylène glycol, et comprenant en outre un composé de dithiophosphate métallique, où le rapport de l'additif sur le composé de dithiophosphate métallique est de 9:1 à 1:9.

12. Utilisation selon la revendication 11, dans laquelle l'hydrocarbure comprend un fluide hydrocarbure à base de pétrole ou un fluide hydrocarbure synthétique.
